# EUROPEAN PATENT APPLICATION

(11) **EP 4 579 630 A1**
(43) Date of publication of application: **02.07.2025**
(21) Application number: 23857206.9
(22) Date of filing: 09.08.2023
(51) Int. Cl.: G08G 5/00, B64D 27/24, B64F 1/36

(54) **PREDICTION DEVICE, NAVIGATION MANAGEMENT SYSTEM, AND PREDICTION PROGRAM**

(30) Priority: 24.08.2022 JP 2022133587
(71) Applicant: DENSO CORPORATION, Kariya-city, Aichi 448-8661 (JP)
(72) Inventor: NAKAMURA, Masaya, Kariya- city Aichi 4488661 (JP); YOSHIDA, Shuhei, Kariya- city Aichi 4488661 (JP)
(74) Representative: TBK
(86) International application number: PCT/JP2023/029056
(87) International publication number: WO 2024/043093

(57) **Abstract**

A prediction device (20) predicts a required performance and/or a state of a battery which is a drive device provided to an eVTOL. The prediction device (20) includes an acquisition unit (21) configured to acquire information including a departure point and/or an arrival point of target navigation, a prediction unit (22) configured to predict, using the information as acquired, a performance and/or a state required for the battery during the navigation, and an output unit (23) configured to output a prediction result. The prediction unit is configured to predict the required performance and/or the state of the drive device based on history information including information related to the required performance and/or the state of the drive device in the past including a departure point and/or an arrival point that match the departure point and/or the arrival point of the target navigation.

## Description

### CROSS REFERENCE TO RELATED APPLICATION

The present application is based on Japanese Patent Application No. 2022-133587 filed on August 24, 2022. The entire disclosures of all of the above applications are incorporated herein by reference.

### TECHNICAL FIELD

The present disclosure relates to a prediction device, a navigation management system, and a prediction program.

### BACKGROUND ART

Patent Literature 1 discloses a power supply information determination device to be applied to an electric flight vehicle. The power supply information determination device determines a power supply facility based on location information. The location information includes at least one of coordinates of facilities, the number of idle facilities, and availability of the idle facilities. Contents of the description of the prior art literature are incorporated by reference as a description of technical elements in this description.

### PRIOR ART LITERATURE

### PATENT LITERATURE

PATENT LITERATURE 1:WO2021/245836

### SUMMARY OF INVENTION

For an electric moving object which is away from the land, more attention needs to be paid to ensuring a battery capacity and safety during navigation than for an electric vehicle. In order to ensure the battery capacity and the safety during the navigation, it is necessary to predict, with high accuracy, a performance and state required for the battery during the navigation.

However, in a case of an electric moving object which moves in a horizontal direction and a vertical direction, the electric moving object is required to provide a high output continuously for a predetermined time during departure or arrival in which a movement having a vertical direction component is performed. Therefore, a proportion of a capacity required during the departure and/or arrival to a total capacity of the battery is high. During the departure or arrival, a prediction error is likely to occur because the prediction is likely to be affected by environment of a departure point or an arrival point in addition to a large influence on the battery at the high output or high capacity.

Therefore, even when the technique disclosed in Patent Literature 1 is used, it is difficult to accurately predict the required battery performance and battery state during the navigation. In the above viewpoint and other viewpoints that are not mentioned, further improvements are required for a prediction device, a navigation management system, and a prediction program.

An object of the present disclosure is to provide a prediction device, a navigation management system, and a prediction program capable of improving accuracy of predicting a required performance and/or a state of a drive device.

According to an aspect of the present disclosure, a prediction device is configured to predict a required performance and/or a state of a drive device provided to an electric moving object. The electric moving object is configured to move in a horizontal direction and a vertical direction. The prediction device comprises: an acquisition unit configured to acquire information including a departure point and/or an arrival point of target navigation; a prediction unit configured to predict the required performance and/or the state of the drive device using the information acquired by the acquisition unit; and an output unit configured to output the required performance and/or the state of the drive device predicted by the prediction unit. The prediction unit is configured to predict the required performance and/or the state of the drive device based on history information that is related to the required performance and/or the state of the drive device in the past and in which the departure point and/or the arrival point matches the departure point and/or the arrival point of the target navigation.

Since a navigation schedule of the electric moving object is finite and a repetition frequency is high, the history information can be utilized. According to the prediction device of the disclosure, the prediction is performed based on the history information at the departure point and/or the arrival point where the prediction error is likely to occur. As a result, accuracy of predicting the required performance and/or the state of the drive device can be improved.

According to an aspect of the present disclosure, a navigation management system is for an electric moving object. The electric moving object is configured to move in a horizontal direction and a vertical direction. The navigation management system comprises: a prediction device configured to acquire information including a departure point and/or an arrival point of target navigation, and predict, using the information as acquired, a required performance and/or a state of a drive device, which is provided to the electric moving object; and a navigation management device configured to manage navigation of the electric moving object, and execute a predetermined process based on the required performance and/or the state of the drive device as predicted. The prediction device is configured to predict the required performance and/or the state of the drive device based on history information that is related to the required performance and/or the state of the drive device in the past and in which the departure point and/or the arrival point matches the departure point and/or the arrival point of the target navigation.

Since the navigation schedule of the electric moving object is finite and the repetition frequency is high, the history information can be utilized. According to the navigation management system, the prediction is performed based on the history information at the departure point and/or the arrival point where the prediction error is likely to occur. As a result, the accuracy of predicting the required performance and/or the state of the drive device can be improved. The information with high prediction accuracy can be reflected in navigation management.

According to an aspect of the present disclosure, A prediction program is for predicting a required performance and/or a state of a drive device provided to an electric moving object. The electric moving object is configured to move in a horizontal direction and a vertical direction. The program is configured to cause at least one processor to: acquire information including a departure point and/or an arrival point of target navigation; and predict the required performance and/or the state of the drive device using the information as acquired and based on history information that is related to the required performance and/or the state of the drive device in the past and in which the departure point and/or the arrival point matches the departure point and/or the arrival point of the target navigation.

Since the navigation schedule of the electric moving object is finite and the repetition frequency is high, the history information can be utilized. According to the prediction program of the disclosure, the prediction is performed based on the history information at the departure point and/or the arrival point where the prediction error is likely to occur. As a result, the accuracy of predicting the required performance and/or the state of the drive device can be improved.

Multiple aspects disclosed in the description adopt different technical means to achieve respective objects. Reference numerals in parentheses in the claims and items exemplify the correspondence with portions of embodiments described later, and are not intended to limit the technical scope. The objects, features, and advantageous effects disclosed in this description will become more apparent with reference to the following detailed description and accompanying drawings.

### BRIEF DESCRIPTION OF THE DRAWINGS

FIG. 1 is a diagram showing a power profile of an eVTOL.
FIG. 2 is a diagram showing a configuration of the eVTOL and a ground station.
FIG. 3 is a diagram showing a schematic configuration of a navigation management system in a first embodiment.
FIG. 4 is a block diagram showing a prediction device.
FIG. 5 is a flowchart showing an example of a navigation management method.
FIG. 6 is a flowchart showing an example of a prediction method.
FIG. 7 is a flowchart showing an example of a method for generating a prediction model.
FIG. 8 is a diagram showing a relationship between an input and an output.
FIG. 9 is a diagram showing a schematic configuration of the navigation management system in a second embodiment.
FIG. 10 is a diagram showing a modification.

### DESCRIPTION OF EMBODIMENTS

Hereinafter, multiple embodiments will be described with reference to the drawings. Duplicate descriptions may be omitted by designating corresponding components by the same reference numerals in each embodiment. When only a part of a configuration is described in each embodiment, a configuration of another embodiment described earlier can be applied to the other part of the configuration. Further, in addition to combinations of configurations explicitly shown in the description of the embodiments, the configurations of multiple embodiments can be partially combined even when the combinations are not explicitly shown as long as there is no problem in the combinations in particular.

A prediction device, a navigation management system, and a prediction program to be described below are applied to an electric moving object which moves in a horizontal direction and a vertical direction. The movement of the electric moving object may include not only a movement in the horizontal direction or the vertical direction, but also a movement in a direction having a horizontal direction component and a vertical direction component, that is, in an oblique direction. Examples of the electric moving object include an electronic vertical take-off and landing aircraft (eVTOL), an electronic short distance take-off and landing aircraft (eSTOL), a drone, and an electric submarine. The eVTOL is an abbreviation of an electronic vertical take-off and landing aircraft. The eSTOL is an abbreviation of an electronic short distance take-off and landing aircraft. The eVTOL, the eSTOL, and the drone may be referred to as electric flight vehicles.

The electric moving object may be any of a manned aircraft and an unmanned aircraft. In a case of the manned aircraft, the electric moving object is operated by a pilot as an operator. In a case of the unmanned aircraft, the electric moving object may be remotely operated by an operator or may be automatically and remotely operated by a control system. The description of A and/or B means at least one of A and B. That is, only A, only B, and both A and B can be included.

### (First Embodiment)

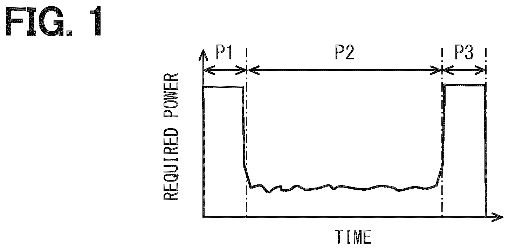

First, a power profile of an electric moving object will be described with reference to FIG. 1. Hereinafter, an example of the eVTOL serving as the electric moving object is shown.

### <Power Profile>

FIG. 1 shows a power profile from take-off to landing of the eVTOL. A period P1 is referred to as a take-off period, a take-off time, a departure period, a departure time, or the like. A period P2 is referred to as a cruising period, a cruising time, or the like. A period P3 is referred to as a landing period, a landing time, an arrival period, an arrival time, or the like. For convenience, in FIG. 1, required power, that is, an output is constant in substantially an entire region of each of the periods P1 and P3.

The eVTOL ascends from a take-off point to a cruising start point in the period P1. The eVTOL cruises at a predetermined altitude in the period P2. The eVTOL descends from an end point of the period P2 to a landing point in the period P3. A movement direction of the eVTOL mainly includes a horizontal direction component in the period P2 and mainly includes a vertical direction component in each of the periods P1 and P3. In the periods P1 and P3 in which the eVTOL moves in the vertical direction, a motor of the eVTOL is required to provide a high output continuously for a predetermined time. Therefore, a proportion of a capacity of the battery required for the period P1 and/or the period P3 to a total capacity is high.

Therefore, as to be described later, a prediction device of the present embodiment predicts a required performance and/or a state of a drive device provided to the eVTOL based on history information at a departure point and/or an arrival point of target navigation. Power profiles of other electric moving objects each of which moves in the horizontal direction and the vertical direction are similar to that of the eVTOL. For example, in a case of the electric submarine, the electric submarine descends from the departure point to the cruising start point in the period P1, and cruises in the period P2. Then, in the period P3, the electric submarine ascends from an end point of the cruising period to the arrival point.

### <Navigation Management System>

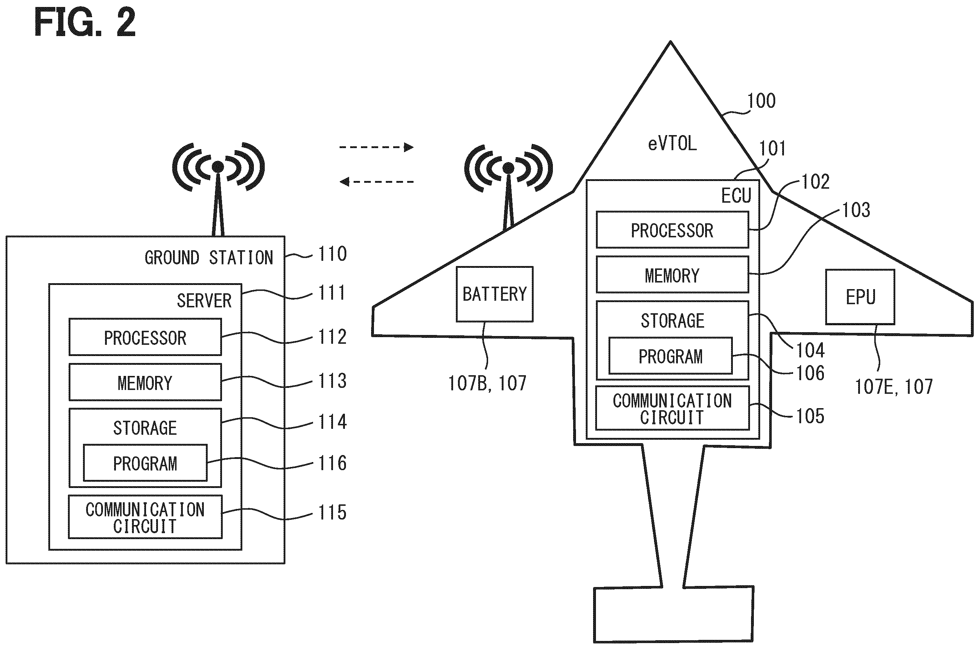

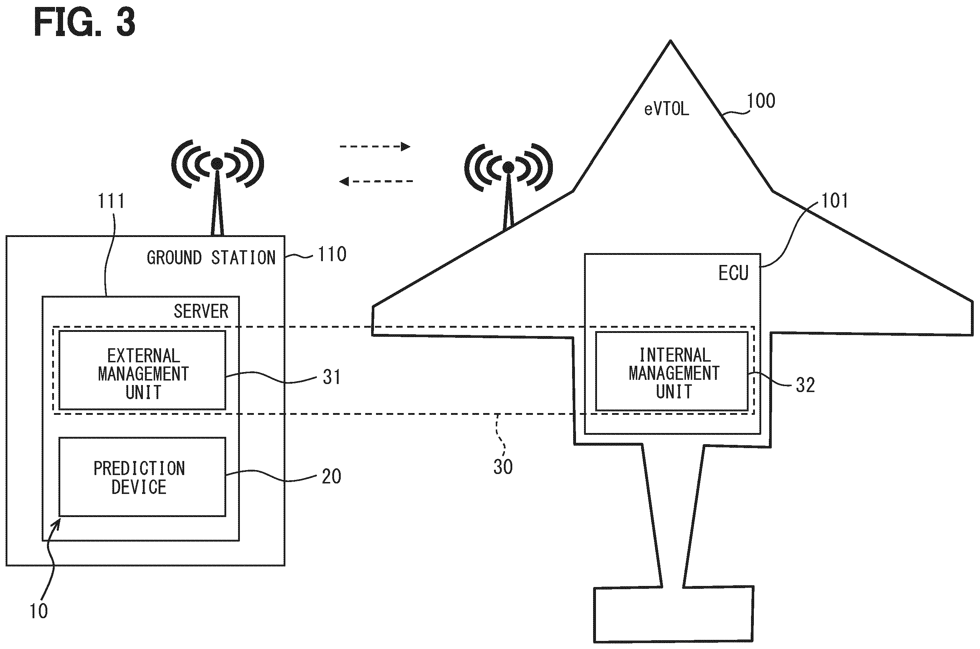

FIG. 2 shows a configuration of the eVTOL and a ground station. FIG. 3 shows a schematic configuration of a navigation management system.

The navigation management system is a system for planning a navigation schedule, monitoring a navigation status, collecting and managing information related to navigation, supporting the navigation, and the like. At least a part of functions of the navigation management system may be arranged in an internal computer of an eVTOL 100 shown in FIG. 2. At least a part of the functions of the navigation management system may be arranged in an external computer that can wirelessly communicate with the eVTOL 100. An example of the external computer is a server 111 of a ground station 110. The ground station 110 can wirelessly communicate with the eVTOL 100. The ground station 110 can wirelessly communicate with other ground stations.

As an example, in the present embodiment, a part of the functions of the navigation management system is arranged in an ECU 101 of the eVTOL 100, and a part of the functions of the navigation management system is arranged in the server 111 of the ground station 110. The functions of the navigation management system are shared between the ECU 101 and the server 111. The ECU is an abbreviation of an electronic control unit.

The ECU 101 includes a processor 102, a memory 103, a storage 104, and a communication circuit 105 for wireless communication. The processor 102 executes various processes by accessing the memory 103. The memory 103 is a rewritable volatile storage medium. The memory 103 is, for example, a RAM. The RAM is an abbreviation of a random access memory. The storage 104 is a rewritable nonvolatile storage medium. The storage 104 stores a program 106 to be executed by the processor 102. The program 106 constructs multiple functional units by causing the processor 102 to execute multiple instructions. The ECU 101 may include multiple processors 102.

Similar to the ECU 101, the server 111 includes a processor 112, a memory 113, a storage 114, and a communication circuit 115. The processor 112 executes various processes by accessing the memory 113. The memory 113 is a rewritable volatile storage medium, for example, a RAM. The storage 114 is a rewritable nonvolatile storage medium. The storage 114 stores a program 116 to be executed by the processor 112. The program 116 constructs multiple functional units by causing the processor 112 to execute multiple instructions. The server 111 may include multiple processors 112.

As shown in FIG. 2, the eVTOL 100 includes a drive device 107. The drive device 107 is at least one of devices for rotationally driving a propeller which is not shown. The propeller applies a propulsive force to the eVTOL 100. The drive device 107 includes a battery 107B and/or an electric propulsion unit (EPU) 107E. The EPU is an abbreviation of an electric propulsion unit. The battery 107B supplies electric power to the EPU 107E, an auxiliary machine (not shown) such as an air conditioner, the ECU 101, and the like. The number and arrangement of the battery 107B are not particularly limited.

The EPU 107E includes a motor and an inverter, and rotationally drives the propeller. The number of EPUs 107E is, for example, the same as the number of propellers. That is, the EPU 107B and the propeller are connected in a one-to-one relationship. Alternatively, two or more propellers may be connected to one EPU 107E via a gear box.

As shown in FIG. 3, a navigation management system 10 includes a prediction device 20 and a navigation management device 30. As described above, the navigation management system 10 is a system for planning a navigation schedule, monitoring a navigation status, collecting and managing information related to navigation, supporting the navigation, and the like.

The prediction device 20 predicts a required performance and/or a state of the drive device 107 provided to the eVTOL 100. As an example, the prediction device 20 of the present embodiment is functionally disposed in the server 111 of the ground station 110. Details of the prediction device 20 will be described later.

The navigation management device 30 performs the functions of the navigation management system 10 other than the prediction function. The navigation management device 30 manages navigation of the eVTOL 100 and executes a predetermined process based on a prediction result of the prediction device 20.

As an example, the navigation management device 30 of the present embodiment includes an external management unit 31 and an internal management unit 32. The external management unit 31 is functionally disposed in the server 111 of the ground station 110. The internal management unit 32 is functionally disposed in the ECU 101 of the eVTOL 100. In this way, a part of the functions of the navigation management device 30 is arranged in the server 111, and the other part of the functions is arranged in the ECU 101. The external management unit 31 and the internal management unit 32 can wirelessly communicate with each other. The external management unit 31 can communicate with various devices arranged in the ground station 110 in a wired or wireless manner. The internal management unit 32 can communicate with various devices arranged in the eVTOL 100 in a wired or wireless manner.

### <Prediction Device>

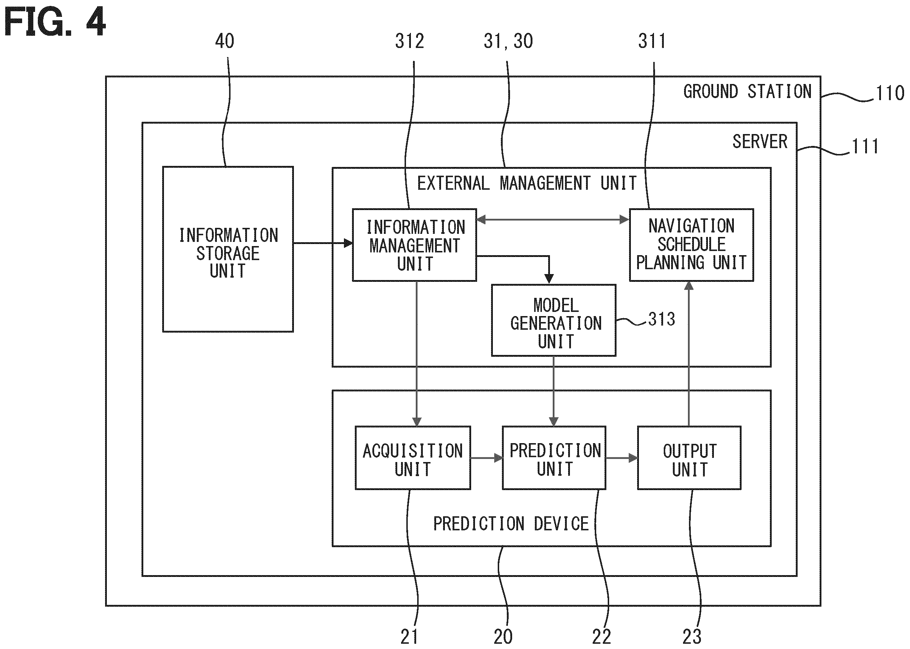

FIG. 4 shows functional blocks of the prediction device. FIG. 4 also shows functional blocks of the external management unit. The prediction device 20 includes an acquisition unit 21, a prediction unit 22, and an output unit 23.

The acquisition unit 21 acquires information necessary for predicting the required performance and/or the state of the drive device 107 in target navigation. The information necessary for the prediction includes at least a departure point and/or an arrival point of navigation that is a prediction target. As an example, the acquisition unit 21 acquires the information necessary for prediction from the navigation management device 30. The information necessary for prediction is input to the acquisition unit 21. Therefore, the acquisition unit 21 may be referred to as an input unit.

The acquisition unit 21 may acquire a model (type) for the target navigation in addition to the departure point and/or the arrival point of the target navigation, as the information necessary for prediction. In addition to the above-described information, the acquisition unit 21 may acquire weather information of the departure point and/or the arrival point of the target navigation, that is, a current flight. The weather information may include, for example, a wind direction, a wind speed, and an atmospheric pressure.

In addition to the above-described information, the acquisition unit 21 may acquire operation characteristic information of the target navigation. The operation characteristic information is, for example, information related to individual differences in models, or a skill and habit of a pilot. The operation characteristic information may be information related to an airframe and the pilot received from a terminal. The operation characteristic information may be past information of an airframe and a pilot of the target navigation. The operation characteristic information may include, for example, moving speeds in the vertical direction, the horizontal direction, and the oblique direction, an adjustment time of an airframe position with respect to the arrival point, or a transition time from a cruising mode to a landing mode.

The prediction unit 22 predicts the required performance and/or the state of the drive device 107 using the acquired information of the acquisition unit 21. Based on the history information, the prediction unit 22 predicts the required performance of the drive device 107 and/or the state of the drive device 107 in the target navigation. The prediction unit 22 predicts the required performance and/or the state of the drive device 107 by, for example, regression analysis. The prediction unit 22 predicts the required performance and/or the state of the drive device 107 based on, for example, a prediction map or a prediction model constructed using the history information. As an example, the prediction unit 22 acquires the prediction model from the navigation management device 30. The prediction unit 22 predicts the required performance and/or the state of the battery 107B of the target navigation by inputting the information acquired by the acquisition unit 21 to the prediction model.

The output unit 23 outputs a prediction result of the prediction unit 22 to an outside of the device. The output unit 23 outputs the required performance and/or the state of the drive device 107. An output data format of the required performance and/or the state of the drive device 107 may be, for example, an absolute value at a predetermined time point in the flight or an absolute value of the entire flight. The output data format may be a time-series profile at a predetermined time point in the flight or may be a time-series profile of the entire flight. The output unit 23 outputs, for example, the prediction result to the navigation management device 30.

The output unit 23 outputs, as an example, the required performance and/or the state of the battery 107B that is the drive device 107. The required performance and/or state of the battery 107B include at least one of an output (W) of the battery 107B, a power amount (Wh), an SOC, a temperature of the battery 107B, a resistance (internal resistance) of the battery 107B, and an SOH. The SOC is an abbreviation of a state of charge. The SOH is an abbreviation of a state of health. The output and the power amount are indices related to the performance of the battery essential for the eVTOL 100 to fly. The SOC, the temperature, the resistance, and the SOH are indices indicating the state of the battery to be managed from a viewpoint of maintaining a performance (output requirement, cruising distance) and ensuring safety.

A specific example of the output data format is a power amount during departure (take-off) and/or arrival (landing). Another specific example is a maximum output during the departure and/or arrival. Another specific example is an output profile of an entire flight. Another specific example is an output profile during the departure and/or arrival. Another specific example is a profile of at least one of the SOC, the temperature, and the resistance in the entire flight. Another specific example is a resistance value during the departure and/or arrival. Another specific example is a temperature during the departure and/or arrival. Another specific example is the SOH during the departure and/or arrival.

### <Navigation Management Device>

As shown in FIG. 4, as an example, the external management unit 31 of the navigation management device 30 includes a navigation schedule planning unit 311, an information management unit 312, and a model generation unit 313.

The navigation schedule planning unit 311 plans a navigation schedule of the eVTOL 100 based on, for example, information received from a terminal which is not shown. The input information includes, for example, information related to the departure point, the arrival point, and the model (type). The input information may further include information such as a departure time point, an arrival time point, pilot information, the number of occupants (the number of passengers), and a loaded weight. The navigation schedule planning unit 311 may acquire weather information of a departure point, an arrival point or the like and plan the navigation schedule in consideration of the weather information. As an example, the navigation schedule planning unit 311 plans the navigation schedule based on the prediction result of the prediction device 20.

The information management unit 312 acquires the information required by the prediction device 20 and outputs the information to the acquisition unit 21. The information management unit 312 outputs at least information related to the departure point and/or the arrival point of the target navigation. That is, the departure point and the arrival point of the current flight are output. The information management unit 312 may output information related to the model (type) for the target navigation in addition to the information related to the departure point and/or the arrival point of the target navigation.

The information management unit 312 may output the weather information of the departure point and/or the arrival point of the target navigation, in addition to the information related to the departure point and/or the arrival point. The information management unit 312 may output the operation characteristic information of the target navigation, in addition to the information related to the departure point and/or the arrival point. The information management unit 312 may output the weather information and/or the operation characteristic information together with the information related to the departure point and/or the arrival point and the information related to the model.

The information management unit 312 acquires the information required by the prediction device 20 from the navigation schedule planning unit 311, for example. The information management unit 312 may acquire, for example, the weather information and/or the operation characteristic information from the outside of the external management unit 31. The information management unit 312 may acquire at least a part of the operation characteristic information from an information storage unit 40, which is to be described later, based on the information received from the terminal.

The information management unit 312 acquires the history information necessary for generating the model and outputs the history information to the model generation unit 313. The information management unit 312 acquires, as the history information, history information of the drive device 107 that matches at least the information output to the acquisition unit 21, and outputs the history information to the model generation unit 313. The information management unit 312 may acquire all the history information related to past navigation and output the history information to the model generation unit 313. The information management unit 312 acquires the history information from the information storage unit 40, as an example.

The history information includes information related to the required performance and/or the state of the drive device 107 in the past navigation whose departure point and/or arrival point match those of the target navigation. The history information may include information related to the required performance and/or the state of the drive device 107 in the past whose model also matches that of the target navigation in addition to the departure point and/or arrival point.

The history information may include information related to the required performance and/or the state of the drive device 107, and a weather condition and/or an operation characteristic in the past whose departure point and/or arrival point match those of the target navigation. The history information may include information related to the required performance and/or the state of the drive device 107, and the weather condition and/or the operation characteristic in the past whose departure point and/or arrival point and the model match those of the target navigation.

The information management unit 312 outputs, as an example, the information related to the required performance and/or the state of the battery 107B in the past navigation whose conditions match. The information management unit 312 outputs the history information to the model generation unit 313 at a predetermined timing. For example, when the history information stored in the information storage unit 40 increases by a predetermined amount, the information management unit 312 may output the target history information to the model generation unit 313. The information management unit 312 may output the target history information to the model generation unit 313 at a predetermined cycle. The information management unit 312 may output, at a timing when the information to be output to the acquisition unit 21 is acquired, the history information matching the output information to the model generation unit 313.

The model generation unit 313 generates the prediction model such as multiple regression based on the history information acquired from the information management unit 312. As an example, the model generation unit 313 generates the prediction model by machine learning using the history information as training data. The model generation unit 313 outputs the generated prediction model to the prediction unit 22. The external management unit 31 may include a map generation unit instead of the model generation unit 313, and the prediction device 20 may perform the prediction based on a prediction map.

The navigation management device 30 may control, for example, driving of the inverter and hence the motor constituting the EPU according to a control signal from a flight control device (not shown) provided in the eVTOL 100. The navigation management device 30 may have a function of the flight control device. In this case, the navigation management device 30 executes various processes related to flight control. The various processes include, for example, a process of generating a control signal indicating a target rotation speed of the propeller, in order to implement an instructed flight state. Further, the various processes include a process of generating a control signal indicating a target tilt angle of the propeller, and a process of generating a control signal indicating a target position of a flap (not shown) for adjusting lift of the eVTOL 100. The navigation management device 30 executes the above-described various processes, and causes the eVTOL 100 to fly in a flight state corresponding to an operation of the operator or a remote operation of the control system.

The navigation management device 30 may control the auxiliary machine (not shown) such as the air conditioner. The navigation management device 30 acquires, from each sensor provided to the eVTOL 100, inside air information indicating an internal temperature and humidity and outside air information indicating an external temperature and humidity. The navigation management device 30 acquires setting information such as a set temperature set by an input terminal. The navigation management device 30 controls the air conditioner based on the inside air information, the outside air information, and the setting information. The navigation management device 30 may switch a control mode of the EPU 107E and/or the auxiliary machine based on the prediction result of the prediction device 20.

As described above, the server 111 of the ground station 110 includes the prediction device 20 and the external management unit 31. As an example, the server 111 further includes the information storage unit 40. The information storage unit 40 stores the history information related to the drive device 107 of the eVTOL 100. The history information may be, for example, an absolute value at a predetermined time point in the flight or an absolute value of the entire flight. The output data format may be a time-series profile at a predetermined time point in the flight or may be a time-series profile of the entire flight. The output unit 23 outputs, for example, the prediction result to the navigation management device 30. The information storage unit 40 collects and stores the history information of the navigation from each eVTOL 100 and/or each ground station 110. The information storage unit 40 may store the operation characteristic information in addition to the history information.

The information storage unit 40 is not limited to being disposed in the server 111 of the ground station 110. For example, the information storage unit 40 may be disposed in a data center which is not shown.

### <Navigation Management Method>

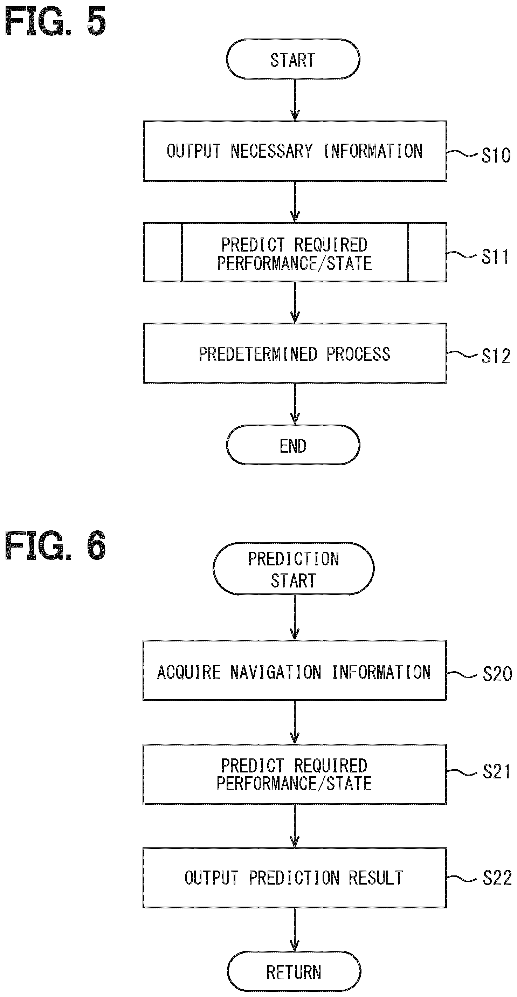

FIG. 5 shows a process to be performed by the navigation management system during planning of the navigation schedule. FIG. 5 shows an example of a navigation management method. The execution of the programs 106 and 116 for navigation management by the processors 102 and 112 corresponds to execution of the navigation management method. At least a part of the programs 106 and 116 for the navigation management may be stored in the corresponding storages 104 and 114 using, for example, an OTA technique. The OTA is an abbreviation of over the air.

The navigation management system 10 executes the process shown in FIG. 5 during the planning of the navigation schedule. First, the navigation management device 30 acquires the information necessary for prediction and outputs the information to the prediction device 20 (step S10). The navigation management device 30 acquires, through input from the input terminal, the information related to the departure point and/or the arrival point of the navigation which is a prediction target. The navigation management device 30 may acquire the information related to the model for the target navigation in addition to the information related to the departure point and/or the arrival point.

The navigation management device 30 may acquire the weather information of the departure point and/or the arrival point of the target navigation, in addition to the information related to the departure point and/or the arrival point. The navigation management device 30 may acquire the operation characteristic information of the target flight, in addition to the information related to the departure point and/or the arrival point. As an example, the navigation management device 30 outputs the departure point and/or the arrival point, the model, the weather information, and the operation characteristic information to the prediction device 20.

Next, the prediction device 20 predicts the required performance and/or the state of the drive device 107 based on the information acquired from the navigation management device 30 (step S11). The prediction process will be described later.

Next, the navigation management device 30 executes a predetermined process based on the prediction result of the prediction device 20 (step S12), and ends the series of processing. As an example, the navigation management device 30 plans a navigation schedule based on the prediction result. The navigation management device 30 plans the navigation schedule in consideration of the performance and the state of the battery 107B predicted based on the history information. The navigation management device 30 may calculate a cruising range based on the prediction result, and control the EPU 107E and the auxiliary machine according to the cruising range. The navigation management device 30 may perform notification on a display device or the like based on the prediction result. The navigation management device 30 may plan charging or maintenance based on the prediction result.

### <Prediction Method>

FIG. 6 shows the processing in step S11, that is, a method for predicting the required performance and/or the state of the drive device 107. The execution of the program 116 for the prediction by the processor 112 corresponds to execution of the prediction method. At least a part of the program 116 for the prediction may be stored in the corresponding storage 114 using, for example, the OTA technique. The OTA is an abbreviation of the over the air.

As shown in FIG. 6, the prediction device 20 acquires navigation information that is information necessary for the prediction (step S20). The prediction device 20 acquires the navigation information of the target navigation from the navigation management device 30. As an example, the prediction device 20 acquires the information related to the departure point and/or the arrival point, the model, the weather information of the departure point and/or the arrival point, and the operation characteristic information.

Next, the prediction device 20 predicts the required performance and/or the state of the drive device 107 using the acquired information (step S21). As an example, the prediction device 20 predicts the required performance and/or the state of the battery 107B based on the prediction model generated by machine learning using the history information as the training data. The prediction device 20 obtains the required performance and/or the state of the battery 107B as an output by inputting the navigation information described above to the prediction model.

Next, the prediction device 20 outputs the prediction result to the outside of the device (step S22), and ends the series of processing. As an example, the prediction device 20 outputs the prediction result to the navigation management device 30.

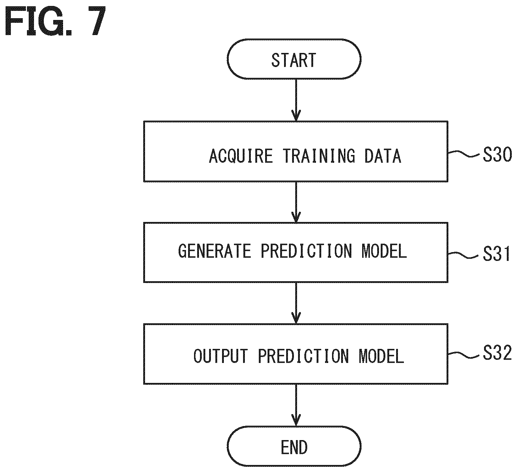

FIG. 7 shows a prediction model generation process to be executed by the navigation management device 30. As an example, the navigation management device 30 repeats the process shown in FIG. 7 at a predetermined cycle. That is, the navigation management device 30 periodically updates the prediction model.

As shown in FIG. 7, first, the navigation management device 30 acquires the history information as the training data for the machine learning (step S30). The navigation management device 30 acquires the history information of the drive device 107 from the information storage unit 40, for example.

Next, the navigation management device 30 generates the prediction model by machine learning (step S31). The navigation management device 30 generates the prediction model by machine learning using the acquired history information as the training data. The history information, that is, navigation history, increases as the time elapses. By increasing the history information used as the training data, accuracy of the prediction can be improved.

Next, the navigation management device 30 outputs the generated prediction model to the prediction device 20 (step S32), and ends the series of processing. An example in which the prediction model is periodically updated has been described, but the present disclosure is not limited thereto. The navigation management device 30 may update the prediction model irregularly.

For example, the navigation management device 30 may acquire the history information at a timing when the history information stored in the information storage unit 40 increases by a predetermined amount, and generate the prediction model. For example, the navigation management device 30 may acquire the history information every time a predetermined time elapses, and generate the prediction model. The navigation management device 30 generates the prediction model for each departure point or arrival point, for example. Multiple prediction models may be held by the navigation management device 30 or may be held by the prediction device 20. The navigation management device 30 may acquire, at the timing when the information to be output to the prediction device 20 is acquired, the history information in which the conditions match those of the output information, and generate the prediction model.

### <Summary of First Embodiment>

An electric moving object such as the eVTOL 100 which moves in a horizontal direction and a vertical direction navigates in a state where the electric moving object is away from the land. Therefore, more attention needs to be paid to ensuring a battery capacity and safety during the navigation than for an electric vehicle. In order to ensure the battery capacity and the safety during the navigation, it is necessary to predict, with high accuracy, a performance and state required for the battery during the navigation.

However, in a case of the electric moving object which moves in the horizontal direction and the vertical direction, as shown in FIG. 1, the electric moving object is required to provide a high output continuously for a predetermined time during departure (take-off) or arrival (landing) in which a movement having a vertical direction component is performed. Therefore, a proportion of a capacity required during the departure and/or arrival to a total capacity of the battery 107B is high. During the departure or arrival, the prediction is likely to be affected by environment of the departure point or the arrival point, for example, by the wind direction, the wind speed, or the atmospheric pressure, in addition to a large influence on the battery 107B at the high output or high capacity. Accordingly, an error is likely to occur in the prediction for the performance and state required for the battery 107B during the navigation. In a case of the EPU 107E which is supplied with electric power from the battery 107B and applies the propulsive force, an error is also likely to occur in prediction for a performance and state required during the navigation, similar to the battery.

According to the prediction device 20 of the present embodiment, the required performance and/or the state of the drive device 107 (for example, the battery 107B) are predicted based on the history information. As the history information, the information related to the required performance and/or the state of the drive device 107 in the past navigation whose departure point and/or arrival point match those of the target navigation is used. Since the navigation schedule of the electric moving object is finite and the repetition frequency is high, the history information can be utilized. Since the history information at the departure point or the arrival point where the prediction error is likely to occur is utilized, accuracy of predicting the required performance and/or the state of the drive device 107 can be improved.

Ease of operation, output characteristics, and the like vary depending on the model (type) of the electric moving object. As an example, the prediction device 20 uses, as the history information, the information related to the required performance and/or the state of the drive device 107 in the past whose departure point and/or arrival point and the model match those of the target navigation. Accordingly, the accuracy of predicting the required performance and/or the state of the drive device 107 can be further improved.

The prediction device 20 may predict the required performance and/or the state of the drive device 107 based on the prediction map. The prediction device 20 may perform prediction based on the prediction model such as the multiple regression. As an example, the prediction device 20 predicts the required performance and/or the state of the drive device 107 based on the prediction model generated using machine learning. By using the prediction model, it is possible to achieve high prediction accuracy and high prediction speed even when there are many explanatory variables. Construction of the prediction model can be facilitated by generating the prediction model by machine learning. The prediction accuracy can be further improved by increasing the history information.

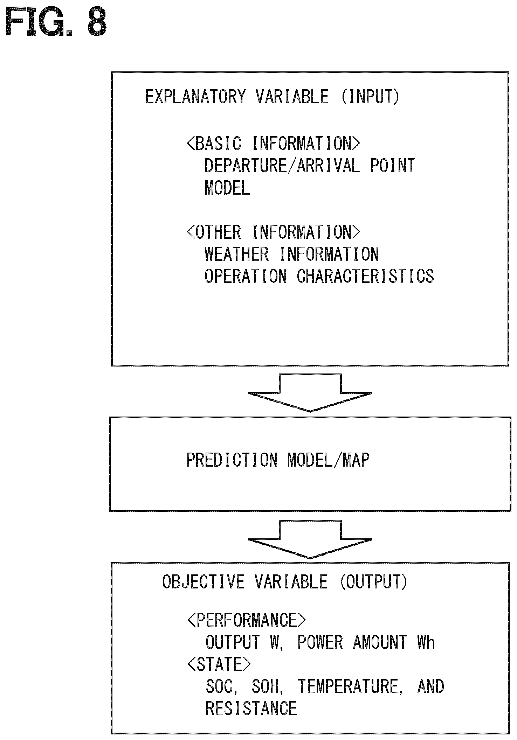

The explanatory variables may be referred to as input variables, input items, or the like. The prediction device 20 obtains objective variables by inputting the explanatory variables to the prediction model, as shown in FIG. 8. The objective variables may be referred to as output variables, output items, or the like. As an example, the drive device 107 includes the battery 107B. The prediction device 20 obtains at least one of the output, the power amount, the SOC, the temperature, the resistance, and the SOH of the battery 107B as the objective variable. The prediction device 20 can predict, with high accuracy, the output performance, the SOC, or the like required for the battery 107B during the navigation. FIG. 8 is a diagram showing a relationship between an input and an output in the prediction device 20.

As shown in FIG. 8, the prediction device 20 constructs the prediction model or the prediction map using important factor parameters as the explanatory variables, thereby improving the accuracy of predicting the required performance and/or the state of the drive device 107. One of the important factor parameters is the history information of the same departure point and arrival point as those of the target navigation, and other important factor parameters are the history information of the same model. The information may be referred to as basic information. However, as the other factor parameters (basic information), history information of a flight altitude, history information of a flight route, history information of departure and arrival time zones, or the like may be added. The flight altitude affects, for example, an air density, the atmospheric pressure, the outside air temperature, and an output required for an altitude. The flight route affects, for example, a flight distance and the outside air temperature. The time zone affects, for example, the outside air temperature and a waiting time. By adding the other factor parameters that are likely to cause an error, the prediction accuracy can be further improved.

As described above, in a case of the electric moving object which moves in the horizontal direction and the vertical direction, the electric moving object is required to provide a high output continuously for a predetermined time during the departure or arrival in which a movement having a vertical direction component is performed. Therefore, as information other than the above-described basic information, that is, other information, a factor parameter that greatly affects the maximum output or the power amount during the departure or arrival may be added to the explanatory variable of the prediction model. Accordingly, the prediction accuracy can be improved.

One of the factor parameters, which is the other information, is the weather information of the departure point and/or the arrival point of the target navigation. As an example, the prediction device 20 includes, as the information for prediction, the weather information of a target departure point and/or arrival point, together with the basic information. The weather conditions of the departure point and the arrival point, for example, the wind direction, the wind speed, and the atmospheric pressure, affect an operation of the electric moving object during the departure or arrival. By adding the weather information of the departure point and the arrival point to the factor parameters, the prediction accuracy can be further improved.

Another one of the factor parameters, which is the other information, is the operation characteristic information in the target navigation. As an example, the prediction device 20 includes, as the information for prediction, the operation characteristic information in the target navigation, together with the basic information. An individual variation in the operation characteristics in the same model (type) affects the operation of the electric moving object during the departure or arrival, regardless of whether the aircraft is a manned aircraft or an unmanned aircraft. Variations in the operation characteristics such as a skill (skill level) and habit of the pilot also affect the operation of the electric moving object during the departure or arrival. A variation in airframe factors and a variation in pilot factors appear in the moving speeds in the vertical direction, the horizontal direction, and the oblique direction, the adjustment time of the airframe position with respect to the arrival point, the transition time from the cruising mode to the arrival (landing) mode, or the like. By adding the operation characteristic information such as the moving speed, the adjustment time, and the transition time as the operation characteristic information to the factor parameters, the prediction accuracy can be further improved.

Another one of the factor parameters, which is the other information, is the loaded weight. The loaded weight is weights of passengers (persons), articles to be carried, or the like. As the loaded weight increases, a higher output is required. By adding the loaded weight to the factor parameters, the prediction accuracy can be further improved. The factor parameters that greatly affect the maximum output and the power amount during the departure and arrival are not limited to the above examples. In a case of the prediction model generated by machine learning, if the machine learning progresses together with the accumulation of the history information, a new factor parameter can be extracted as the other information.

The navigation management system 10 of the present embodiment includes the navigation management device 30 and the prediction device 20. The prediction device 20 predicts, based on the history information, the performance and state required for the drive device 107 during the navigation. As the history information, the information related to the required performance and/or the state of the drive device 107 in the past navigation whose departure point and/or arrival point match those of the target navigation is used. Since the navigation schedule of the electric moving object is finite and the repetition frequency is high, the history information can be utilized. Since the history information at the departure point or the arrival point where the prediction error is likely to occur is utilized, the accuracy of predicting the required performance and/or the state of the drive device 107 can be improved. The navigation management device 30 can reflect the information with high prediction accuracy in the navigation management.

The program 116 of the present embodiment is applied to the electric moving object which moves in the horizontal direction and the vertical direction. The program 116 includes causing at least one processor 112 (processing unit) to predict the required performance and/or the state of the drive device 107 based on the history information. The history information includes the information related to the required performance and/or the state of the drive device 107 in the past navigation whose departure point and/or arrival point match those of the target navigation. Since the navigation schedule of the electric moving object is finite and the repetition frequency is high, the history information can be utilized. Since the history information at the departure point or the arrival point where the prediction error is likely to occur is utilized, the accuracy of predicting the required performance and/or the state of the drive device 107 can be improved.

An example in which the battery 107B is mainly set as the drive device 107 is shown, but the present disclosure is not limited thereto. The performance and state required for the EPU 107E during the navigation may be predicted. For example, a temperature of the motor or the inverter, an output state of the motor with respect to a target, and the like may be predicted. Of course, the performance and state of both the battery 107B and the EPU 107E may be predicted.

### (Second Embodiment)

This embodiment is a modification of a basic aspect of the preceding embodiment, and the description of the preceding embodiment can be incorporated. In the preceding embodiment, the prediction device is functionally disposed in the server of the ground station. Alternatively, the prediction device may be functionally disposed in a computer other than the server.

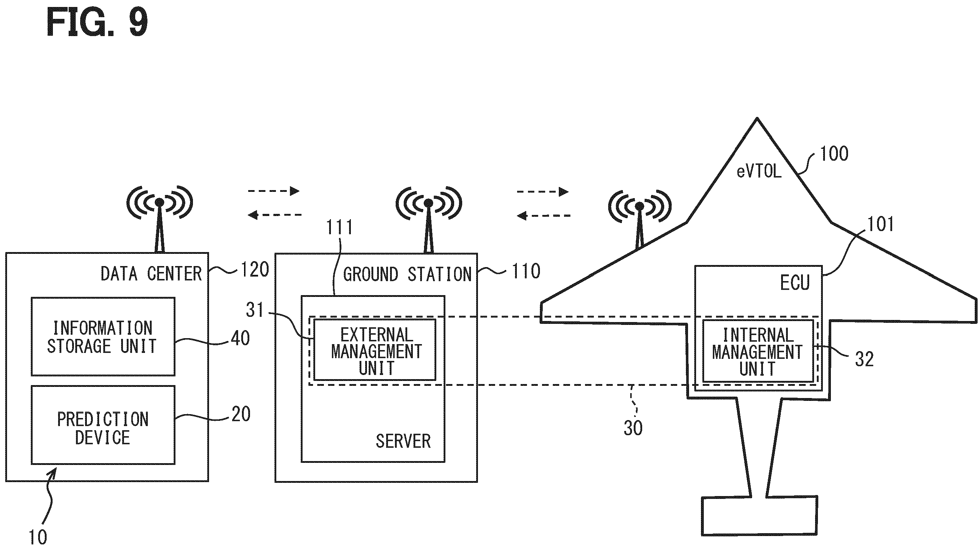

FIG. 9 shows a functional arrangement of the navigation management system 10 according to the present embodiment. The prediction device 20 is functionally disposed in a data center 120. The data center 120 collects and stores data from each eVTOL 100 and/or each ground station 110 by wireless communication. A server (not shown) of the data center 120 includes a processor, a RAM, and a storage in which a program is stored. As an example, in FIG. 9, the information storage unit 40 is also disposed in the data center 120.

As in the preceding embodiment, the external management unit 31 of the navigation management device 30 is functionally disposed in the server 111 of the ground station 110. The internal management unit 32 is functionally disposed in the ECU 101. Other configurations are the same as those described in the preceding embodiment.

### <Summary of Second Embodiment>

In the present embodiment, the prediction device 20 is disposed in the data center 120, and the navigation management device 30 is disposed in the eVTOL 100 and the ground station 110. In the configuration in which the functions are shared as described above, the same effect as the configuration described in the preceding embodiment can also be obtained.

The prediction device 20 functionally disposed in the data center 120 utilizes the history information at the departure point or the arrival point where the prediction error is likely to occur. Accordingly, the accuracy of predicting the required performance and/or the state of the drive device 107 can be improved.

### <Modification>

As described in the preceding embodiment, at least a part of the functions of the navigation management system 10 may be disposed in the internal computer of the eVTOL 100. At least a part of the functions of the navigation management system 10 may be arranged in an external computer that can wirelessly communicate with the eVTOL 100. All of the functions may be arranged in the eVTOL 100, or all of the functions may be arranged in the server 111 of the ground station 110.

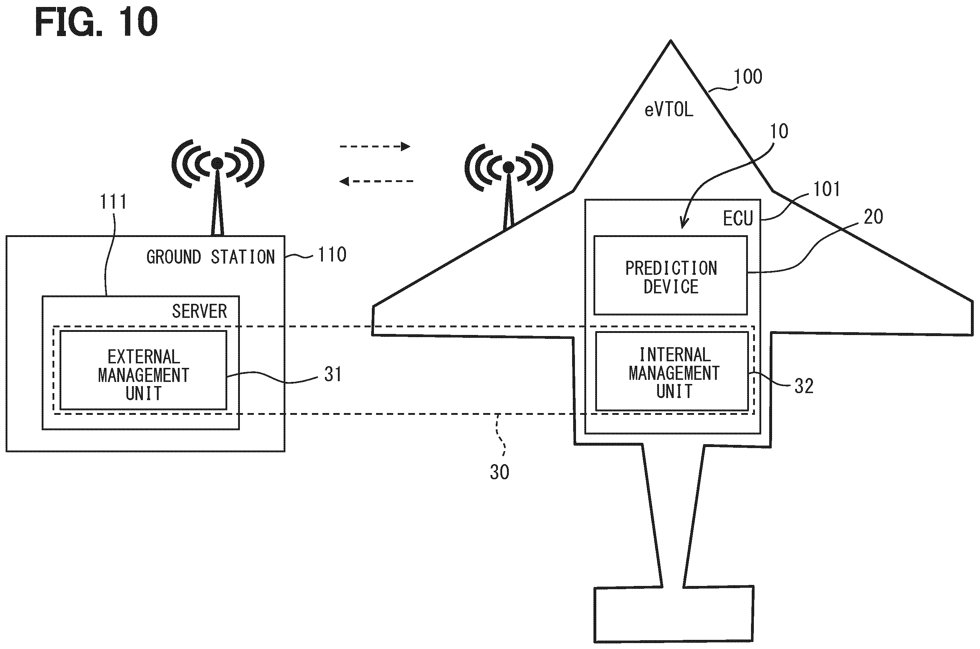

For example, as shown in FIG. 10, the prediction device 20 may be functionally disposed in the ECU 101 of the eVTOL 100. In FIG. 10, the prediction device 20 and the internal management unit 32 are disposed in the ECU 101. The external management unit 31 is disposed in the server 111.

### (Other Embodiments)

The disclosure in the descriptions, the drawings, and the like is not limited to the illustrated embodiments. The disclosure encompasses the illustrated embodiments and modifications thereof made by those skilled in the art. For example, the disclosure is not limited to combinations of components and/or elements described in the embodiments. The disclosure may be implemented in various combinations. The disclosure may include additional portions that can be added to the embodiments. The disclosure encompasses omission of the components and/or the elements of the embodiments. The disclosure encompasses the replacement or combination of the components and/or the elements between one embodiment and another. The disclosed technical scope is not limited to those described in the embodiments. The several technical scopes disclosed are indicated by the description of the claims, and should be construed to include all modifications within the meaning and range equivalent to the description of the claims.

The disclosure in the descriptions, the drawings, and the like is not limited by the description of the claims. The disclosure in the descriptions, the drawings, and the like encompasses the technical ideas described in the claims, and extends to technical ideas that are more diverse and extensive than the technical ideas described in the claims. Accordingly, various technical ideas can be extracted from the disclosure of the descriptions, the drawings, and the like without being restricted by the description of the claims.

When it is mentioned that a certain element or layer is "on", "coupled", "connected", or "bonded", the certain element or layer may be directly on, coupled, connected, or bonded to another element or layer, or an interposed element or an interposed layer may be present. In contrast, when it is mentioned that a certain element is "directly on", "directly coupled", "directly connected", or "directly bonded" to another element or layer, no interposed element or interposed layer is present. Other words used to describe a relationship between elements should be interpreted in the similar manner (for example, "between" and "directly between", "adjacent to" and "directly adjacent to"). When used in the description, the term "and/or" includes any of and all combinations related to one or multiple associated listed items.

Each of the various flowcharts shown in the present disclosure is an example, and the number of steps constituting the flowchart and the execution order of the process can be appropriately changed. The device, the system, and the method described in the present disclosure may be implemented by a dedicated computer constituting a processor that is programmed to execute one or multiple functions implemented by a computer program. The device and the method described in the present disclosure may be implemented using a dedicated hardware logic circuit. Further, the device and the method described in the present disclosure may be implemented by one or multiple dedicated computers implemented by a combination of a processor that executes a computer program and one or more hardware logic circuits.

For example, a part or all of the functions of the processor 102 may be implemented as hardware. An aspect in which a certain function is implemented as hardware includes an aspect in which one or multiple ICs are used. As the processor (arithmetic core), a CPU, an MPU, a GPU, a DFP, or the like can be adopted. The CPU is an abbreviation of a central processing unit. The MPU is an abbreviation of a micro-processing unit. The GPU is an abbreviation of a graphics processing unit. The DFP is an abbreviation of a data flow processor.

A part or all of the functions of the processor 102 may be implemented by combining multiple types of calculation processing devices. A part or all of the functions of the processor 102 may be implemented using an SoC, an ASIC, an FPGA, or the like. The SoC is an abbreviation of a system-on chip. The ASIC is an abbreviation of an application specific integrated circuit. The FPGA is an abbreviation of a field programmable gate array. The same applies to the processor 112.

The computer program may be stored in a computer-readable nontransitionary tangible recording medium (non-transitory tangible storage medium) as an instruction to be executed by the computer. As the program storage medium, an HDD, an SSD, a flash memory, or the like can be adopted. The HDD is an abbreviation of a hard disk drive. The SSD is an abbreviation of a solid state drive. A program for causing a computer to function as the prediction device 20 or the navigation management device 30, and a non-transitory tangible recording medium such as a semiconductor memory in which the program is recorded are also included in the scope of the present disclosure.

### (Disclosure of Technical Ideas)

This description discloses multiple technical ideas described in multiple items listed below. Some items may be written in a multiple dependent form with subsequent items referring to the preceding item as an alternative. Some items may be written in a multiple dependent form referring to another multiple dependent form. These items written in a multiple dependent form define multiple technical ideas.

### (Technical idea 1)

A prediction device is configured to predict a required performance and/or a state of a drive device (107) provided to an electric moving object (100). The electric moving object is configured to move in a horizontal direction and a vertical direction. The prediction device comprises: an acquisition unit (21) configured to acquire information including a departure point and/or an arrival point of target navigation; a prediction unit (22) configured to predict the required performance and/or the state of the drive device using the information acquired by the acquisition unit; and an output unit (23) configured to output the required performance and/or the state of the drive device predicted by the prediction unit. The prediction unit is configured to predict the required performance and/or the state of the drive device based on history information that is related to the required performance and/or the state of the drive device in the past and in which the departure point and/or the arrival point matches the departure point and/or the arrival point of the target navigation.

### (Technical idea 2)

The prediction device is according to the technical idea 1. The acquisition unit is configured to acquire model information of the electric moving object. The history information is related to the required performance and/or the state of the drive device in the past and in which the departure point and/or the arrival point and a model match the departure point and/or the arrival point and a model of the target navigation.

### (Technical idea 3)

The prediction device is according to the technical idea 1 or 2. The acquisition unit is configured to acquire weather information of the departure point and/or the arrival point of the target navigation.

### (Technical idea 4)

The prediction device is according to any one of the technical ideas 1 to 3. The acquisition unit is configured to acquire operation characteristic information in the target navigation.

### (Technical idea 5)

The prediction device is according to any one of the technical ideas 1 to 4. The drive device includes a battery (107B).

### (Technical idea 6)

The prediction device is according to the technical idea 5. The required performance and/or the state of the battery as the drive device includes at least one of an output performance, a power amount, an SOC, a temperature, a resistance, and an SOH.

### (Technical idea 7)

The prediction device is according to any one of the technical ideas 1 to 6. The prediction unit is configured to predict the required performance and/or the state of the drive device based on a prediction model generated by machine learning using the history information as training data.

## Claims

1. A prediction device configured to predict a required performance and/or a state of a drive device (107) provided to an electric moving object (100), the electric moving object configured to move in a horizontal direction and a vertical direction, the prediction device comprising:
an acquisition unit (21) configured to acquire information including a departure point and/or an arrival point of target navigation;
a prediction unit (22) configured to predict the required performance and/or the state of the drive device using the information acquired by the acquisition unit; and
an output unit (23) configured to output the required performance and/or the state of the drive device predicted by the prediction unit, wherein
the prediction unit is configured to predict the required performance and/or the state of the drive device based on history information that is related to the required performance and/or the state of the drive device in the past and in which the departure point and/or the arrival point matches the departure point and/or the arrival point of the target navigation.

2. The prediction device according to claim 1, wherein
the acquisition unit is configured to acquire model information of the electric moving object, and
the history information is related to the required performance and/or the state of the drive device in the past and in which the departure point and/or the arrival point and a model match the departure point and/or the arrival point and a model of the target navigation.

3. The prediction device according to claim 1, wherein
the acquisition unit is configured to acquire weather information of the departure point and/or the arrival point of the target navigation.

4. The prediction device according to claim 1, wherein
the acquisition unit is configured to acquire operation characteristic information in the target navigation.

5. The prediction device according to any one of claims 1 to 4, wherein
the drive device includes a battery (107B).

6. The prediction device according to claim 5, wherein
the required performance and/or the state of the battery as the drive device includes at least one of an output performance, a power amount, an SOC, a temperature, a resistance, and an SOH.

7. The prediction device according to claim 1, wherein
the prediction unit is configured to predict the required performance and/or the state of the drive device based on a prediction model generated by machine learning using the history information as training data.

8. A navigation management system for an electric moving object (100), the electric moving object configured to move in a horizontal direction and a vertical direction, the navigation management system comprising:
a prediction device (20) configured to
acquire information including a departure point and/or an arrival point of target navigation, and
predict, using the information as acquired, a required performance and/or a state of a drive device (107), which is provided to the electric moving object; and
a navigation management device (30) configured to
manage navigation of the electric moving object, and
execute a predetermined process based on the required performance and/or the state of the drive device as predicted, wherein
the prediction device is configured to predict the required performance and/or the state of the drive device based on history information that is related to the required performance and/or the state of the drive device in the past and in which the departure point and/or the arrival point matches the departure point and/or the arrival point of the target navigation.

9. A prediction program for predicting a required performance and/or a state of a drive device (107) provided to an electric moving object (100), the electric moving object configured to move in a horizontal direction and a vertical direction, the program configured to cause at least one processor (112) to:
acquire information including a departure point and/or an arrival point of target navigation; and
predict the required performance and/or the state of the drive device using the information as acquired and based on history information that is related to the required performance and/or the state of the drive device in the past and in which the departure point and/or the arrival point matches the departure point and/or the arrival point of the target navigation.
